# EUROPEAN PATENT SPECIFICATION

(11) **EP 3 770 808 B1**
(45) Date of publication and mention of the grant of the patent: **31.12.2025**
(21) Application number: 20305833.4
(22) Date of filing: 21.07.2020
(51) Int. Cl.: G06V 20/56, G06V 20/58

(54) **VEHICLE FOR PUBLIC TRANSPORT COMPRISING A SECURITY SYSTEM**
FAHRZEUG FÜR DEN ÖFFENTLICHEN VERKEHR MIT EINEM SICHERHEITSSYSTEM
VÉHICULE DE TRANSPORT PUBLIC COMPRENANT UN SYSTÈME DE SÉCURITÉ

(30) Priority: 22.07.2019 IT 201900012558
(43) Date of publication of application: 27.01.2021
(73) Proprietor: IVECO FRANCE S.A.S., 69200 Vénissieux (FR)
(72) Inventor: CODRON, Stephane, 69008 LYON (FR)
(74) Representative: Studio Torta S.p.A.

(56) References cited:
- EP-A1- 3 342 660

## Description

### CROSS-REFERENCE TO RELATED APPLICATIONS

This patent application claims priority from Italian patent application no. 102019000012558 filed on July 22, 2019.

### TECHNICAL FIELD

The invention relates to a road vehicle for public transport, in particular to a safety system for said vehicle for public transport.

### PRIOR ART

Public transport vehicles normally feature a high distance from the ground, so as to allow the vehicle to stop close to sidewalks, in particular get onto sidewalks. This high distance from ground is also needed in order to enable some manoeuvres of the vehicle.

In this configuration, there clearly is a large space under the floor of the vehicle, between the two wheels, which is accessible from the front par. It is extremely important to prevent a possible obstacle from getting into this space while the vehicle 1 is moving.

Furthermore, public transport vehicles are increasingly becoming autonomous vehicles. To this aim, they use different sensor means in order to acquire different items of information concerning the driving of the vehicle along the road, for example the presence of objects or living beings, which can penetrate the above-mentioned space, thus causing damages to the vehicle or harming themselves.

In order to do so, video cameras are known, which observe part of the surface of the road in front of the vehicle. However, these video cameras cannot make a distinction between an inanimate obstacle and a living obstacle, for example a child or an animal, present on the road.

Alternatively, a radar or a LIDAR can be used to detect the distance and the size of an obstacle standing in the path of the vehicle, which, as a consequence, could be hit by the vehicle. However, these radar sensors cannot - alone - make a distinction between an inanimate obstacle and a living obstacle. Furthermore, these sensors cannot be directed towards the ground, since they would detect the ground as an obstacle.

As a consequence, in autonomous vehicles, in order to avoid hitting living objects standing in the path of the vehicle, the sensors should be placed at a height that is smaller than the distance from the ground of the vehicle.

EP-A1-3342660 discloses an apparatus for operating a pedestrian detection and collision mitigation system (PDCMS) function of a vehicle including: a front detection sensor detecting a presence of a pedestrian on a driving lane of the vehicle and a distance and a relative speed between the pedestrian and the vehicle; a vehicle sensor detecting a speed of the vehicle; an electronic control unit operating a PDCMS function based on information detected by the front detection sensor and the vehicle sensor; and a warning unit operated to inform a driver of a collision of the pedestrian with the vehicle by a control of the electronic control unit.

The object of the invention is to solve the above-mentioned drawbacks in a simple and economic fashion.

### SUMMARY OF THE INVENTION

The objects discussed above are reached by means of a road vehicle for public transport comprising a system system according to the appended claims.

### BRIEF DESCRIPTION OF THE DRAWINGS

Further features and advantages of the invention will be best understood upon perusal of the following description, which is provided by mere way of explanatory and non-limiting example, with reference to the accompanying drawings, wherein:
- figure 1 is a perspective view of a vehicle comprising a safety system according to the invention; and
- figure 2 is a schematic side view of a vehicle comprising a safety system according to the invention in a use condition.

### DETAILED DESCRIPTION OF THE INVENTION

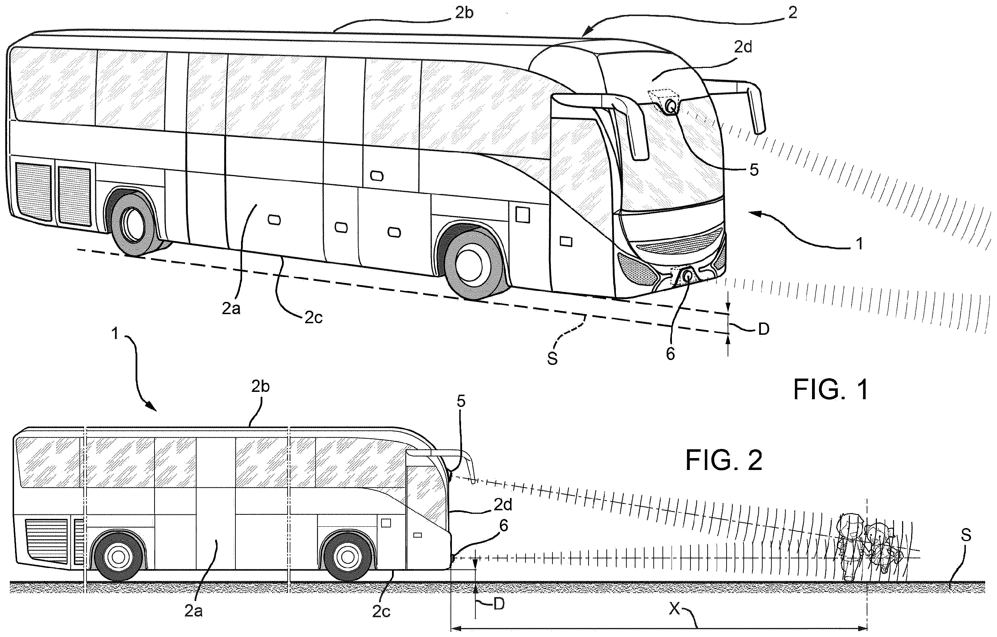

Figure 1 shows a public transport vehicle 1 comprising a plurality of walls 2, namely a pair of side walls 2a, a roof 2b, a floor 2c and a front wall 2d, which are connected to one another so as to define an inner volume, which can accommodate the passengers of the vehicle 1. The floor 2c is raised at a distance D, for example 300 mm, relative to the ground S, in a known manner.

The vehicle 1 is an autonomous vehicle and, as a consequence, it comprises sensor means 4, operating means and an electronic control unit, which are configured to allow for an autonomous drive of the vehicle 1 in a known manner. In brief, the sensor means 4 acquire data concerning the path of the vehicle 1 along the road S and the electronic control unit processes said data and controls the operating means and the powertrain of the vehicle so as to allow the latter to move along the road.

According to the invention, the autonomous drive sensor means 4 further comprise a safety system, which is configured to allow for the identification of living obstacles present along the path of the vehicle. As a consequence, in the case described herein, the safety system is integrated in the sensor means 4 so as to allow for an autonomous driving mode.

In particular, the sensor means 4 comprise thermal sensor means 5 pointed towards the road S and obstacle detection means 6 aimed parallel to the road S. The relative fields of view (also known as angles of observation) of the thermal sensor means 5 and of the obstacle detection means 6 intersect one another at a pre-adjusted distance X relative to the front wall 2d of the vehicle 1. This distance X advantageously ranges from 5 m to 100 m relative to the front wall 2d.

The thermal sensor means 5 can advantageously be moved so as to change their inclination in order to change said pre-adjusted distance X depending on the driver's needs.

In particular, the thermal sensor means 5 are configured to acquire a thermal image of their field of view at a pre-set distance based on their angle, whereas the obstacle detection means 6 are configured to acquire data concerning the presence or the absence of an obstacle in their field of view as well the size thereof.

According to the embodiment described herein, the thermal sensor means 5 comprise one single thermal video camera on the front wall 2d in a raised position, or example close to the edge between the front wall 2d and the roof 2b, pointing towards the surface of the road S.

The obstacle detection means 6 comprise one single video camera with a long-focus lens, which is carried by the front wall 2d in a lower position compared to the thermal means 5, for example approximately at the same height as the floor 2c, namely at the distance from the ground, and is aimed parallel to the road.

As it is known, the vehicle 1 comprises a control unit, which is electrically connected to the thermal sensor means 5 and to the obstacle detection means 6 so as to acquire data recorded by them, process it and control the driving of the vehicle along the road S, in particular detecting whether a living obstacle is standing on the road at a height that is similar to or smaller than the distance of the vehicle 1 from the ground.

The operation of the vehicle 1 comprising a safety system according to the invention is the following.

With reference to figure 2, a child is crouching on the road S and, thus, has a smaller size than the distance of the vehicle 1 from the road. The latter, as it gets closer to the child, immediately identifies it thanks to the sensor means 6, in particular calculating the dimensions thereof.

In parallel, the thermal sensor means 5 acquire a thermal image of the obstacle identified by the obstacle detection means 6. The electronic control unit, knowing the size of the obstacle, the distance X from the obstacle, which is given by the intersection of the fields of view of the thermal sensor means 5 and of the obstacle detection means 6, and whether it is a living being, controls the driving, for example the braking, of the vehicle accordingly.

Therefore, the invention further relates to a method to identify an obstacle on the road S thanks to a safety system of the type described above. The method comprises the following steps:
- detecting, thanks to the obstacle detection means 6, the presence and the size of an obstacle on the road S;
- acquiring, thanks to the thermal sensor means 5, a thermal image of the obstacle;
- deciding, based on the thermal image, whether the obstacle is a living being or not; and
- controlling the driving of the vehicle 1 accordingly, the distance X, the nature and the size of said obstacle being known.

Owing to the above, the advantages of a vehicle 1 comprising a safety system according to the invention are evident.

The processing of the data acquired by the thermal sensor means 5 and by the obstacle detection means 6 allows users to detect, at the same time, the size, the position of the obstacle and whether it is a living being or not.

The fact that the safety system is integrated in the sensor means 4 allows the above-mentioned function to the obtained in a simple and economic fashion.

Furthermore, the relative position of the thermal sensor means 5 and of the obstacle detection means 6 allows the road S to be controlled from a great distance X, using standard video cameras or radars.

Finally, the vehicle 1 comprising a safety system according to the invention can clearly be subjected to changes and variants, which, though, do not go beyond the scope of protection set forth in the claims.

For instance, the thermal sensor means 5 or the obstacle detection means 6 could comprise other elements or a different number of elements or elements that are carried by another wall of the vehicle 1.

The safety system described herein can clearly be used in other vehicles having a great distance from the ground, for example a bus.

## Claims

1. An automated driverless road vehicle (1) comprising a plurality of walls (2a, 2d), a roof (2b) and a floor (2c) that delimit an internal space, said vehicle (1) comprising a control unit and sensor means (4), said control unit being configured to acquire data from said sensor means (4) so as to allow for an automated driving of said vehicle along a road (S), said vehicle (1) comprising a safety system configured to detect the presence of a living obstacle on said road (S);
wherein the safety system comprises thermal sensor means (5) and obstacle detection means (6) carried by one of said walls (2) and electrically connected to said control unit; said control unit being configured to determine the size, the position of said obstacle and whether said obstacle is a living being or not, as a function of the data detected by said thermal sensor means (5) and obstacle detection means (6) and to control said vehicle accordingly;
**characterized in that** said thermal sensor means (5) are carried by said vehicle (1) in a vertically higher position with respect to said obstacle detection means (6) and **in that**
said thermal sensor means (5) are carried by a front wall (2d) of said vehicle (1) and directed, tilted, onto the plane of said road (S) whereas said obstacle detection means (6) are carried by said front wall (2d) directed parallel to the plane of said road (S), the fields of view of said thermal and obstacle detection means (5, 6) intersecting one another at a distance (X) with respect to said front wall.

2. The vehicle according to claim 1, wherein the safety system is integrated in said sensor means (4).

3. The vehicle according to claim 1 or 2, wherein said thermal sensor means (5) comprise a thermal camera.

4. The vehicle according to any one of the foregoing claims, wherein said obstacle detection means (6) comprise a camera with a long-focus lens.

5. The vehicle according to any one of the foregoing claims,, wherein the distance (X) ranges between 5 m and 100 m.

6. The vehicle according to any one of the foregoing claims, wherein the tilting of said thermal sensor means (5) can be adjusted in order to change said distance (X).

7. A method of identifying an obstacle on a road (S) by an automated driverless vehicle (1) according to one of the preceding claims, said method comprising the following steps:
i) detecting, by means of obstacle detection means (6), the presence and the size of an obstacle on said road (S);
ii) acquiring, by means of thermal sensor means (5), a thermal image of said obstacle; iii) deciding, on the basis of said thermal image, whether said obstacle is a living being or not; and
iv) consequently controlling the driving of said vehicle (1), on the basis the distance (X) and size of said obstacle detected in step i) and the nature of said obstacle being known from step iii).

## Patentansprüche

1. Automatisiertes fahrerloses Straßenfahrzeug (1), umfassend eine Vielzahl von Wänden (2a, 2d), ein Dach (2b) und einen Boden (2c), die einen Innenraum begrenzen, wobei das Fahrzeug (1) eine Steuereinheit und Sensormittel (4) umfasst, wobei die Steuereinheit konfiguriert ist, um Daten von den Sensormitteln (4) zu erfassen, um ein automatisiertes Fahren des Fahrzeugs entlang einer Straße (S) zu ermöglichen, wobei das Fahrzeug (1) ein Sicherheitssystem umfasst, das konfiguriert ist, um das Vorhandensein eines lebenden Hindernisses auf der Straße (S) zu erfassen;
wobei das Sicherheitssystem thermische Sensormittel (5) und Hinderniserfassungsmittel (6) umfasst, die von einer der Wände (2) getragen werden und elektrisch mit der Steuereinheit verbunden sind; wobei die Steuereinheit konfiguriert ist, um die Größe, die Position des Hindernisses und ob das Hindernis ein Lebewesen ist oder nicht, als eine Funktion der von den thermischen Sensormitteln (5) und Hinderniserfassungsmitteln (6) erfassten Daten zu bestimmen und das Fahrzeug entsprechend zu steuern;
**dadurch gekennzeichnet, dass** die thermischen Sensormittel (5) von dem Fahrzeug (1) in einer vertikal höheren Position in Bezug auf die Hinderniserfassungsmittel (6) getragen werden und dass die thermischen Sensormittel (5) von einer Vorderwand (2d) des Fahrzeugs (1) getragen werden und geneigt auf die Ebene der Straße (S) gerichtet sind, während die Hinderniserfassungsmittel (6) von der Vorderwand (2d) getragen werden, die parallel zu der Ebene der Straße (S) gerichtet ist, wobei sich die Sichtfelder der thermischen und Hinderniserfassungsmittel (5, 6) in einem Abstand (X) in Bezug auf die Vorderwand schneiden.

2. Fahrzeug nach Anspruch 1, wobei das Sicherheitssystem in die Sensormittel (4) integriert ist.

3. Fahrzeug nach Anspruch 1 oder 2, wobei die thermischen Sensormittel (5) eine Wärmekamera umfassen.

4. Fahrzeug nach einem der vorhergehenden Ansprüche, wobei die Hinderniserfassungsmittel (6) eine Kamera mit einer Linse langer Brennweite umfassen.

5. Fahrzeug nach einem der vorhergehenden Ansprüche, wobei der Abstand (X) zwischen 5 m und 100 m liegt.

6. Fahrzeug nach einem der vorhergehenden Ansprüche, wobei die Neigung der thermischen Sensormittel (5) angepasst werden kann, um den Abstand (X) zu ändern.

7. Verfahren zum Identifizieren eines Hindernisses auf einer Straße (S) durch ein automatisiertes fahrerloses Fahrzeug (1) nach einem der vorhergehenden Ansprüche, wobei das Verfahren die folgenden Schritte umfasst:
i) Erfassen, mittels Hinderniserfassungsmitteln (6), des Vorhandenseins und der Größe eines Hindernisses auf der Straße (S);
ii) Erfassen, mittels thermischer Sensormittel (5), eines Wärmebilds des Hindernisses;
iii) Entscheiden, auf der Basis des Wärmebilds, ob das Hindernis ein Lebewesen ist oder nicht; und
iv) folglich Steuern des Fahrens des Fahrzeugs (1) auf der Basis des Abstands (X) und der Größe des in Schritt i) erfassten Hindernisses und der Art des Hindernisses, die aus Schritt iii) bekannt ist.

## Revendications

1. Véhicule (1) routier automatisé sans conducteur comprenant une pluralité de parois (2a, 2d), un toit (2b) et un plancher (2c) qui délimitent un espace interne, ledit véhicule (1) comprenant une unité de commande et des moyens à capteur (4), ladite unité de commande étant configurée pour acquérir des données en provenance desdits moyens à capteur (4) de façon à permettre une conduite automatisée dudit véhicule le long d'une route (S), ledit véhicule (1) comprenant un système de sécurité configuré pour détecter la présence d'un obstacle vivant sur ladite route (S) ;
dans lequel le système de sécurité comprend des moyens à capteur thermique (5) et des moyens de détection d'obstacle (6) portés par l'une desdites parois (2) et électriquement connectés à ladite unité de commande ; ladite unité de commande étant configurée pour déterminer la taille, la position dudit obstacle et si ledit obstacle est un être vivant ou non, en fonction des données détectées par lesdits moyens à capteur thermique (5) et moyens de détection d'obstacle (6) et pour commander ledit véhicule en conséquence ;
**caractérisé en ce que** lesdits moyens à capteur thermique (5) sont portés par ledit véhicule (1) à une position verticalement plus élevée par rapport auxdits moyens de détection d'obstacle (6) et **en ce que** lesdits moyens à capteur thermique (5) sont portés par une paroi avant (2d) dudit véhicule (1) et orientés, inclinés, sur le plan de ladite route (S) tandis que lesdits moyens de détection d'obstacle (6) sont portés par ladite paroi avant (2d) orientés parallèlement au plan de ladite route (S), les champs de vision desdits moyens à capteur thermique et de détection d'obstacle (5, 6) faisant intersection à une certaine distance (X) par rapport à ladite paroi avant.

2. Véhicule selon la revendication 1, dans lequel le système de sécurité est intégré dans lesdits moyens à capteur (4).

3. Véhicule selon la revendication 1 ou 2, dans lequel lesdits moyens à capteur thermique (5) comprennent une caméra thermique.

4. Véhicule selon l'une quelconque des revendications précédentes, dans lequel lesdits moyens de détection d'obstacle (6) comprennent une caméra dotée d'un objectif à longue focale.

5. Véhicule selon l'une quelconque des revendications précédentes, dans lequel la distance (X) varie entre 5 m et 100 m.

6. Véhicule selon l'une quelconque des revendications précédentes, dans lequel l'inclinaison desdits moyens à capteur thermique (5) peut être ajustée afin de modifier ladite distance (X).

7. Méthode d'identification d'un obstacle sur une route (S) par un véhicule (1) automatisé sans conducteur selon l'une des revendications précédentes, ladite méthode comprenant les étapes suivantes :
i) la détection, au moyen de moyens de détection d'obstacle (6), de la présence et de la taille d'un obstacle sur ladite route (S) ;
ii) l'acquisition, au moyen de moyens à capteur thermique (5), d'une image thermique dudit obstacle ; iii) le fait de décider, sur la base de ladite image thermique, si ledit obstacle est un être vivant ou non ; et
iv) la commande, en conséquence, de la conduite dudit véhicule (1), sur la base de la distance (X) et la taille dudit obstacle détecté à l'étape i) et de la nature dudit obstacle qui est connue d'après l'étape iii).
